(19) Europäisches Patentamt
European Patent Office
Office européen des brevets

(11) EP 4 582 178 A1

(12) EUROPEAN PATENT APPLICATION
published in accordance with Art. 153(4) EPC

(43) Date of publication:
09.07.2025  Bulletin 2025/28

(51) International Patent Classification (IPC):
B01J 20/10 (2006.01)      B01D 15/00 (2006.01)
B01J 20/04 (2006.01)      B01J 20/28 (2006.01)
C01B 33/22 (2006.01)

(21) Application number: 23859861.9

(22) Date of filing: 13.07.2023

(52) Cooperative Patent Classification (CPC):
B01D 15/00; B01J 20/04; B01J 20/10; B01J 20/28;
C01B 33/22

(86) International application number:
PCT/JP2023/025909

(87) International publication number:
WO 2024/048091 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022  JP 2022137075

(71) Applicant: SETOLAS Holdings, Inc.
Takamatsu-shi, Kagawa 760-0026 (JP)

(72) Inventors:
• TAKABATAKE, Harumi
Sakaide-shi, Kagawa 762-0012 (JP)
• DO, Phuong Thi
Sakaide-shi, Kagawa 762-0012 (JP)

(74) Representative: Vossius & Partner
Patentanwälte Rechtsanwälte mbB
Siebertstrasse 3
81675 München (DE)

(54) ADSORBENT

(57) The present invention addresses the problem of providing a novel adsorbent that has a high adsorption capacity and that is capable of adsorbing a substance to be adsorbed with a small amount of use. The present disclosure provides an adsorbent composed of an amorphous magnesium silicate compound. The magnesium silicate compound according to the present disclosure has an alkali metal content of 1.20 mass% or less. The magnesium silicate compound according to the present disclosure has a solid acid content of 0.70 mmol/g or more.

Fig. 1

EP 4 582 178 A1

**Description**

FIELD

The present invention relates to a novel adsorbent to be used for adsorption of substances to be adsorbed, such as alkali metals.

BACKGROUND

Chemical products often contain even trace residues of impurities such as catalysts or unreacted starting materials used during synthesis or by-products from reaction. From the viewpoint of improving product quality it is desirable to efficiently remove such impurities. Methods for removing such impurities include methods of impurity removal by neutralization, distillation, extraction or adsorption during the process of producing chemical products. Adsorption methods, and especially methods using adsorbents, are most commonly used for convenience.

For example, polyurethane foam is produced by polymerizing polyol and isocyanate starting materials. Polyols used to produce polyurethane foam include polyether polyols, polymer polyols and polyester polyols, which may be used in arbitrary combinations for desired polyurethane performance. For example, a polyether polyol may be produced by addition polymerization of propylene oxide onto glycerin in the presence of an alkali metal-containing basic catalyst, but this requires a post-purification residual catalyst purity of nearly zero.

To achieve such a high level of purity, adsorbents capable of adsorption removal of alkali metal-containing basic catalysts are commonly used during production of polyether polyols. The adsorbents commonly used include, but are not particularly limited to, synthetic products such as molecular sieves, activated alumina, synthetic magnesium silicate, synthetic aluminum silicate and activated carbon; natural products; and processed natural products such as acid clay and activated white clay. PTL 1, for example, discloses an adsorbent which is capable of adsorption removal of alkali metal-containing basic catalysts, the adsorbent consisting of an amorphous synthetic hydrous magnesium silicate compound having specified ranges for the chemical formula, BET specific surface area, alkali metal content and mean particle size.

[CITATION LIST]

[PATENT LITERATURE]

[PTL 1] Japanese Unexamined Patent Publication No. 2004-75674

SUMMARY

[TECHNICAL PROBLEM]

With conventional adsorbents, however, a large amount of adsorbent is necessary with respect to the alkali metal-containing basic catalyst that is to be adsorbed, and this may result in reduced yield due to adsorption of polyether polyol onto the adsorbent, or it may result in large amounts of waste generated after purification. In order to solve these problems, it is highly desirable to increase the adsorption capacity of adsorbents and reduce the amounts in which the adsorbents are used.

It is an object of the present invention to provide a novel adsorbent that can increase adsorption capacity and that allows adsorption of substances to be adsorbed with smaller adsorbent amounts.

[SOLUTION TO PROBLEM]

The present inventors have conducted avid experimentation with the aim of achieving this object, and as a result have found that the adsorption capacity of an adsorbent for metal ions such as $K^+$, $Na^+$ and $Ni^+$ is improved by using an amorphous magnesium silicate compound with a low alkali metal content and high solid acid value. The present disclosure has been completed based on this finding and includes the following aspects.

(First disclosure)

The first disclosure is an adsorbent comprising an amorphous magnesium silicate compound. The magnesium silicate compound has an alkali metal content of 1.20 mass% or lower. The magnesium silicate compound has a solid acid amount of 0.70 mmol/g or greater.

(Second disclosure)

The second disclosure is the first disclosure wherein the magnesium silicate compound is a compound represented by the following formula (1).

$$(MgO)_X \cdot SiO_2 \cdot mH_2O \qquad (1)$$

[In formula (1), x is a number satisfying the inequality $0.1 \le x \le 0.5$. Also, m is a number satisfying the inequality $0.1 \le m \le 1.5$.]

(Third disclosure)

The third disclosure is the first disclosure or second disclosure wherein the BET specific surface area of the magnesium silicate compound is 200 m$^2$/g to 1000 m$^2$/g.

(Fourth disclosure)

The fourth disclosure is any one of the first to third disclosures wherein the total pore volume of the magnesium silicate compound is 0.40 cm$^3$/g to 1.50 cm$^3$/g.

(Fifth disclosure)

The fifth disclosure is a method of reducing the alkali metal content in a polyether polyol. The method includes contacting an adsorbent according to any one of the first to fourth disclosures with a polyether polyol comprising an alkali metal-containing basic catalyst.

[ADVANTAGEOUS EFFECTS OF INVENTION]

According to the invention it is possible to provide a novel adsorbent that can increase adsorption capacity and allows adsorption of substances to be adsorbed with smaller adsorbent amounts.

BRIEF DESCRIPTION OF DRAWINGS

Fig. 1 is a powder X-ray diffraction diagram for the magnesium silicate compound of Example 2.
Fig. 2 is a powder X-ray diffraction diagram for the magnesium silicate compound of Example 4.

DESCRIPTION OF EMBODIMENTS

Preferred embodiments of the adsorbent of the invention will now be explained in detail. Unless otherwise specified, the numerical ranges used herein are ranges that include the upper and lower limits.

[Adsorbent]

The adsorbent according to one embodiment of the invention comprises an amorphous magnesium silicate compound. The magnesium silicate compound has an alkali metal content of 1.20 mass% or lower. The magnesium silicate compound also has a solid acid amount of 0.70 mmol/g or greater.

The adsorbent of the embodiment, comprising the aforementioned amorphous magnesium silicate compound with a low alkali metal content and high solid acid value, can thereby exhibit excellent adsorption capacity for metal ions such as K$^+$, Na$^+$ and Ni$^+$. Because the adsorption capacity is extremely high compared to conventional adsorbents that comprise magnesium silicate compounds, it is possible to drastically reduce the amount of usage of the adsorbent of the embodiment compared to conventional adsorbents. In other words, the adsorbent of the embodiment is a novel adsorbent with extremely high adsorption capacity compared to conventional adsorbents that comprise magnesium silicate compounds, allowing it to be used in a lower amount for adsorption of substances to be adsorbed. In addition, the adsorbent of the embodiment can significantly contribute to reduction in energy consumption and waste treatment, and can aid in efforts to achieve the SDGs (Sustainable Development Goals) adopted by the United Nations.

(Magnesium silicate compound)

The adsorbent according to one embodiment of the invention comprises an amorphous magnesium silicate compound, as mentioned above. The term "amorphous magnesium silicate compound" means a magnesium silicate compound exhibiting an amorphous powder X-ray diffraction pattern.

(Alkali metal content)

For this embodiment, the alkali metal content of the magnesium silicate compound is 1.20 mass% or lower.

An alkali metal content at or below this specified amount can be obtained by lowering the pH of the reaction slurry during synthesis of the magnesium silicate compound, or by carrying out heat aging treatment and/or acid treatment after synthesis. For example, the alkali metal content can be reduced by lowering the pH of the reaction slurry during synthesis of the magnesium silicate compound. It is thought that heat aging treatment carried out after synthesis of the magnesium silicate compound promotes solution deposition of the magnesium silicate compound, allowing the alkali metal content to be reduced. When acid treatment is carried out after synthesis of the magnesium silicate compound, the alkali metal component is replaced by protons of the acid, thus allowing the alkali metal content to be reduced.

Throughout the present specification, "alkali metal component" refers to an alkali metal such as sodium or potassium in a starting material, for example.

The alkali metal content of the magnesium silicate compound is preferably 1.10 mass% or lower and even more preferably 1.00 mass% or lower. The lower limit for the alkali metal content of the magnesium silicate compound is not particularly restricted and may be 0.001 mass%, for example.

(Solid acid amount)

According to one embodiment of the invention the solid acid amount of the magnesium silicate compound is 0.70 mmol/g or greater.

A solid acid amount at or above this specified amount can be obtained by similar means as for the alkali metal content. In other words, a solid acid amount at or above this specified amount can be obtained by lowering the pH of the reaction slurry during synthesis of the magnesium silicate compound, or by carrying out heat aging treatment and/or acid treatment after synthesis. For example, by lowering the pH of the reaction slurry during synthesis of the magnesium silicate compound it is possible to lower the alkali metal content while increasing the solid acid amount. It is thought that heat aging treatment carried out after synthesis of the magnesium silicate compound promotes solution deposition of the magnesium silicate compound, allowing the alkali metal content to be reduced while also increasing the solid acid amount. When acid treatment is carried out after synthesis of the magnesium silicate compound, the alkali metal component is replaced by protons of the acid, thus allowing the alkali metal content to be reduced while increasing the solid acid amount.

The solid acid amount of the magnesium silicate compound is preferably 1.00 mmol/g or greater and even more preferably 1.50 mmol/g or greater. The upper limit for the solid acid amount of the magnesium silicate compound is not particularly restricted but may be 10.00 mmol/g, for example.

A specific method for measuring the solid acid amount is described in the Examples below.

The magnesium silicate compound according to one embodiment of the invention thus exhibits very excellent adsorption capacity for various metal ions, because it has an alkali metal content at or below the specified amount and has a high solid acid amount at or above the specified amount. This allows the adsorbent of the embodiment to adsorb various metal ions when used in a lower amount compared to conventional adsorbents that comprise magnesium silicate compounds.

(Chemical formula)

For this embodiment, the magnesium silicate compound is not particularly restricted so long as it is amorphous, has an alkali metal content at or below the specified amount and has a high solid acid amount at or above the specified amount, but it is preferably a hydrous magnesium silicate compound represented by the following formula (1).

$$(MgO)_X \cdot SiO_2 \cdot mH_2O \qquad (1)$$

[In formula (1), x is a number satisfying the inequality $0.1 \leq x \leq 0.5$. Also, m is a number satisfying the inequality $0.1 \leq m \leq 1.5$.]

If the magnesium silicate compound is a hydrous magnesium silicate compound represented by formula (1) it will be able to more reliably exhibit excellent adsorption capacity for the aforementioned metal ions.

The preferred range for x in formula (1) is $0.2 \leq x \leq 0.35$.

(BET specific surface area)

For this embodiment, the BET specific surface area of the magnesium silicate compound is preferably 200 m$^2$/g to 1000 m$^2$/g. If the BET specific surface area of the magnesium silicate compound is within this range it will be possible to ensure at least a certain degree of adsorption, allowing excellent adsorption capacity for the aforementioned metal ions to be more reliably exhibited.

The BET specific surface area of the magnesium silicate compound is more preferably 220 m$^2$/g or greater and more preferably 250 m$^2$/g or greater. The BET specific surface area of the magnesium silicate compound is also preferably 900 m$^2$/g or lower and more preferably 800 m$^2$/g or lower.

Throughout the present specification, the term "BET specific surface area" refers to the specific surface area of the magnesium silicate compound determined by the BET method. A specific method for measuring the BET specific surface area is described in the Examples below.

(Total pore volume)

For this embodiment, the total pore volume of the magnesium silicate compound is preferably 0.40 cm$^3$/g to 1.50 cm$^3$/g. If the total pore volume of the magnesium silicate compound is within this range it will be possible to ensure at least a certain degree of adsorption, allowing excellent adsorption capacity for the aforementioned metal ions to be more reliably exhibited.

The total pore volume of the magnesium silicate compound is more preferably 0.50 cm$^3$/g or higher. The total pore volume of the magnesium silicate compound is also more preferably 1.20 cm$^3$/g or lower.

A specific method for measuring the total pore volume is described in the Examples below.

(Mean particle size)

For this embodiment, the mean particle size of the magnesium silicate compound is preferably 2.0 $\mu$m to 60.0 $\mu$m. If the mean particle size of the magnesium silicate compound is within this range it will be possible to widen the specific surface area and to ensure at least a certain degree of adsorption, allowing excellent adsorption capacity for the aforementioned metal ions to be more reliably exhibited.

The mean particle size of the magnesium silicate compound is more preferably 5.0 $\mu$m or greater. The mean particle size of the magnesium silicate compound is also more preferably 50.0 $\mu$m or smaller.

A specific method for measuring the mean particle size is described in the Examples below.

[Production method]

The method for producing the magnesium silicate compound to form the adsorbent according to one embodiment of the invention will now be explained using a method for producing the aforementioned hydrous magnesium silicate compound as an example. The magnesium silicate compound to be used as the adsorbent of the invention may be produced by any method and under any conditions, so long as it is amorphous, having an alkali metal content at or below the specified amount and a high solid acid amount at or above the specified amount.

(Synthesis step)

The hydrous magnesium silicate compound can be synthesized by reaction using a water-soluble magnesium compound and a water-soluble silicic acid compound. Examples of water-soluble magnesium compounds include magnesium chloride, magnesium sulfate and magnesium nitrate. Examples of water-soluble silicic acid compounds include silicic acid alkali salts such as sodium silicate, (general formula $Na_2O \cdot nSiO_2$ (n = 2 to 4), commonly known as water glass); sodium metasilicate; sodium orthosilicate; and potassium silicate. The water-soluble silicic acid compound used is most preferably No. 3 water glass.

The reaction may be a batch reaction in which a fixed amount of an aqueous magnesium compound solution and a fixed amount of an aqueous silicic acid compound solution are simultaneously loaded into a reaction tank, or a continuous reaction in which a fixed amount of an aqueous magnesium compound solution and a fixed amount of an aqueous silicic acid compound solution are continuously loaded into a reaction tank to continuously obtain a reaction slurry. Continuous reaction is advantageous from the viewpoint of production efficiency.

The reaction temperature is not particularly restricted and may be a temperature of 15°C to 60°C, for example. The reaction tank may be placed in a thermostatic bath controlled to a constant temperature for reaction, or a container holding the aqueous magnesium compound solution and a container holding the aqueous silicic acid compound solution may be placed in a thermostatic bath controlled to a constant temperature, using a metering pump from each container for loading into the reaction tank.

The reaction pH is 7 to 10, for example, and preferably 8.5 to 9.5. By adjusting the reaction pH to within this range it is possible to form microparticles by the primary particles of the synthesized hydrous magnesium silicate compound. If the primary particles are microparticles, the specific surface area of the hydrous magnesium silicate compound will be increased and the number of adsorption sites will also be increased, allowing the adsorption capacity to be improved.

(Heat aging step)

The reaction slurry obtained by the synthesis step may be aged by heating and stirring. The aging temperature is 60°C to 120°C, for example, and is preferably 70°C to 110°C and more preferably 80°C to 100°C. The aging time is 0.5 hours to 18 hours, for example, preferably 1 hour to 12 hours and more preferably 2 hours to 6 hours. If the synthesized hydrous magnesium silicate compound is heat aged under these specific conditions, the specific surface area of the hydrous magnesium silicate compound will increase and the number of adsorption sites will also increase, thus improving the adsorption capacity.

(Acid treatment step)

The synthesized hydrous magnesium silicate compound may be subjected to acid treatment using an inorganic acid. With acid treatment, the alkali metal components in the synthesized hydrous magnesium silicate compound are replaced by protons of the inorganic acid, thus increasing the solid acid value of the hydrous magnesium silicate compound and consequently allowing the adsorption capacity for alkali metal ions to be improved. Alkali metal components are sodium and potassium from the starting material, for example.

The inorganic acid to be used in the acid treatment step is not particularly restricted, and sulfuric acid, hydrochloric acid and nitric acid may be mentioned as examples.

One specific method for the acid treatment step, i.e. one specific method for replacing the alkali metal components in the synthesized hydrous magnesium silicate compound with protons of an inorganic acid, is a method in which the reaction slurry is processed by solid-liquid separation, and the solid is washed with a diluted inorganic acid, and then further washed with water, for example. Another method is a method in which the reaction slurry is processed by solid-liquid separation and the solid is suspended in a diluted inorganic acid, stirred for a certain time and dehydrated, after which it is washed with water.

The concentration of the inorganic acid may be 0.01 mol/L to 0.5 mol/L, for example, and is preferably 0.02 mol/L to 0.2 mol/L. If the concentration of the diluted inorganic acid is 0.01 mol/L or higher, replacement between the protons of the inorganic acid and the alkali metal components will be sufficient. If the concentration of the diluted inorganic acid is 0.5 mol/L or lower, on the other hand, sulfate ions, chloride ions or nitrate ions of the inorganic acid will be less likely to remain as impurities in the solid. If the concentration of the diluted inorganic acid is 0.5 mol/L or lower the magnesium in the magnesium silicate will be less likely to be dissolved by the inorganic acid.

(Drying step)

The drying method for the synthesized hydrous magnesium silicate compound is not particularly restricted, and for example, it may be a shelf drying method in which the dehydrated solid is placed in a stainless steel vat and dried with hot air. Another drying method is the spray-drying method in which the dehydrated solid is formed into a slurry at a concentration of 100 g/L to 500 g/L in terms of solid content, optionally with adjustment of the dry shape by processing with a wet grinder such as a ball mill, colloid mill, SC mill or Dyno-Mill, and then dried with a spray drier. The drying method used is most preferably a spray-drying method from the viewpoint of facilitating granulation of the hydrous magnesium silicate compound into spheres. Granulation of the hydrous magnesium silicate compound into spheres is advantageous for aiding separation and removal after adsorption treatment.

The magnesium silicate compound obtained by the production method described above is amorphous, due to the reaction conditions during synthesis and on the heat aging step and/or acid treatment step after synthesis, and it has an alkali metal content at or below the specified amount as well as a high solid acid amount at or above the specified amount.

The magnesium silicate compound can be used as an adsorbent for a variety of industrial purposes, and as mentioned above, it is especially useful as an adsorbent for adsorption removal of alkali metal-containing basic catalysts during production of polyether polyols.

[Method of reducing alkali metal content in polyether polyol]

Another embodiment of the invention is a method of reducing the alkali metal content in a polyether polyol. The method includes contacting an adsorbent comprising an amorphous magnesium silicate compound having an alkali metal content at or below the specified amount and a high solid acid amount at or above the specified amount, with a polyether polyol comprising an alkali metal-containing basic catalyst.

Because this method provides very excellent adsorption capacity and allows adsorption of different metal ions with a smaller amount of adsorbent, it is possible to increase the polyether polyol yield and to reduce the amount of waste generated after purification.

One specific method for adsorption removal of a residual alkali metal-containing basic catalyst in a polyether polyol is a method of adding the aforementioned magnesium silicate compound as an adsorbent to the polyether polyol and mixing, and then separating and removing the adsorbent.

The amount of adsorbent to be added will depend on the amount of residual alkali metal-containing basic catalyst, but for example, it may be 0.1 mass% to 10.0 mass% and preferably 0.5 mass% to 5.0 mass%, with respect to the mass of the polyether polyol.

The conditions for adsorption treatment may be stirring at a treatment temperature of 70°C to 150°C, for a treatment time of 5 to 120 minutes, for example. Water may also be added during the adsorption treatment. In this case the water is preferably added at 0.5 mass% to 3.0 mass% with respect to the mass of the polyether polyol. An antioxidant may also be added to the polyether polyol prior to adsorption treatment to prevent degradation.

Before adding the adsorbent to the polyether polyol, neutralizing reaction may be carried out by addition of one or more from among inorganic acids, inorganic acid salts and organic acids, such as phosphoric acid, sulfuric acid, sodium hydrogen pyrophosphate or oxalic acid. In this case the adsorbent is added after completion of the neutralizing reaction.

The invention is not restricted to the embodiments described above or the Examples described below, and can incorporate appropriate combinations, substitutions and modifications within ranges that do not fall outside of the object and gist of the invention.

EXAMPLES

The invention will now be explained in greater detail using Examples and Comparative Examples, with the understanding that the invention is not limited only to these Examples.

The measuring methods used for the physical properties in the Examples and Comparative Examples are as follows.

<$SiO_2$/MgO molar ratio and alkali metal content>

The $SiO_2$/MgO molar ratio and alkali metal content of each magnesium silicate compound were measured using a "ZSX Primus IV" Scanning fluorescent X-ray analyzer by Rigaku Corp.

<BET specific surface area and total pore volume>

The BET specific surface area and total pore volume of each magnesium silicate compound was measured using a "BELSORP-MAX" High precision specific surface area/pore distribution measuring device by MicrotracBel.

<Liquid pH>

The liquid pH of the magnesium silicate compound was measured in the following manner. After placing 2.0 g of dry magnesium silicate compound and 40 mL of ion-exchanged water in a beaker, the mixture was stirred for 5 minutes with a magnetic stirrer, and then No.5C filter paper was used for filtration and the pH of the filtrate was measured. The filtrate pH was recorded as the liquid pH of the magnesium silicate compound.

<Solid acid amount>

After placing 0.1 g of dry magnesium silicate compound into a stoppered Erlenmeyer flask, 5 mL of benzene (Wako, reagent special grade) was added. A 1 mL portion of a 0.1 wt% benzene solution of methyl orange, as an indicator of pKa = 4.8, was added, coloring the dry particles red. Titration was then performed until the dry particles were colored yellow with a 0.1 mol/L n-butylamine-benzene solution, and the amount of n-butylamine-benzene solution required for titration was recorded as A (mL). Since the dry particles return to red after stoppering the Erlenmeyer flask and allowing it to stand for 24 hours, titration was repeated with a 0.1 mol/L n-butylamine-benzene solution until the dry particles turned yellow, and the amount of n-butylamine-benzene solution required for titration was recorded as B (mL). This procedure was repeated once more, and the amount of n-butylamine-benzene solution required for titration was recorded as C (mL). The solid acid amount was calculated from the total of the 3 titrations, based on the following formula.

$$\text{Solid acid amount (mmol/g)} = 0.1(A + B + C)/0.1 \text{ g}$$

<Mean particle size>

The mean particle size of the magnesium silicate compound was measured using a "MICROTRAC MT3000II Series" particle size distribution analyzer by Nikkiso Co., Ltd. Specifically, first 70 mL of a 2.0 g/L aqueous sodium hexametaphosphate solution was added to 0.7 g of the dry magnesium silicate compound, and the mixture was stirred with a magnetic stirrer. After then adding 2 to 4 mL of the dispersion to a 2.0 g/L aqueous sodium hexametaphosphate solution and circulating the dispersion for 1 minute, the particle size distribution analyzer was used to measure the particle size distribution. The mean particle size was determined from the resulting 50% cumulative value (median diameter).
Examples and Comparative Examples of the invention will now be described.

Example 1

(Synthesis test)

A 1.17 mol/L aqueous magnesium sulfate solution and a No. 3 water glass solution comprising 0.46 mol/L $Na_2O$ and 1.44 mol/L $SiO_2$ were continuously loaded into a continuous reaction tank at a fixed rate for coprecipitation reaction. The reaction temperature was 40°C. The pH of the obtained reaction slurry was 8.9. The mean particle size of the particles as the reaction product was 8.2 $\mu$m. The reaction slurry was also suction filtered with a Nutsche filter to remove the water, and the solid was washed with a 20-fold amount of ion-exchanged water with respect to the weight of the solid. The obtained solid was formed into a slurry to a concentration of 250 g/L and spray-dried with a spray drier.
The physical properties of the dry magnesium silicate compound of Example 1 obtained in this manner were measured. The $SiO_2$/MgO molar ratio of the magnesium silicate compound of Example 1 was thus found to be 3.5. The alkali metal content of the magnesium silicate compound of Example 1 was 1.00 mass%. The BET specific surface area of the magnesium silicate compound of Example 1 was 295 $m^2$/g. The total pore volume of the magnesium silicate compound of Example 1 was 0.47 $cm^3$/g. The liquid pH of the magnesium silicate compound of Example 1 was 9.8. The solid acid amount of the magnesium silicate compound of Example 1 was 0.73 mmol/g. The mean particle size of the magnesium silicate compound of Example 1 was 42.2 $\mu$m. The powder X-ray diffraction pattern of the magnesium silicate compound of Example 1 indicated an amorphous form.

(Adsorption test 1)

After placing 160 g of polypropylene glycol (polymerization degree: 3,000), already having potassium hydroxide dissolved to a potassium concentration of 1400 ppm, in a four-necked round bottom flask, it was heated and stirred with a mantle heater while replacing nitrogen. Ion-exchanged water was loaded in at 1.6 mL when the liquid temperature reached 85°C, and then after the liquid temperature reached 90°C, 0.4 g of adsorbent comprising the synthesized magnesium silicate compound was added and the mixture was heated and stirred for 30 minutes. After 30 minutes, the treatment solution was immediately suction filtered at a suction pressure of 0.02 MPa to obtain a filtrate. The filtrate was measured by potentiometric titration using 0.01 N hydrochloric acid to determine the potassium concentration in the filtrate as 209 ppm.

(Adsorption test 2)

After placing 160 g of polypropylene glycol (polymerization degree: 3,000), already having potassium hydroxide dissolved to a potassium concentration of 1400 ppm, in a four-necked round bottom flask, it was heated and stirred with a mantle heater while replacing nitrogen. Ion-exchanged water was loaded in at 1.6 mL when the liquid temperature reached 85°C, and then after the liquid temperature reached 90°C, 0.56 g of adsorbent comprising the synthesized magnesium silicate compound was added and the mixture was heated and stirred for 30 minutes. After 30 minutes, the treatment solution was immediately suction filtered at a suction pressure of 0.02 MPa to obtain a filtrate. The filtrate was measured by potentiometric titration using 0.01 N hydrochloric acid to determine the potassium concentration in the filtrate as 128 ppm.

(Adsorption test 3)

After placing 160 g of polypropylene glycol (polymerization degree: 3,000), already having potassium hydroxide dissolved to a potassium concentration of 1400 ppm, in a four-necked round bottom flask, it was heated and stirred with a mantle heater while replacing nitrogen. Ion-exchanged water was loaded in at 1.6 mL when the liquid temperature reached 85°C, and then after the liquid temperature reached 90°C, 0.8 g of adsorbent comprising the synthesized magnesium silicate compound was added and the mixture was heated and stirred for 30 minutes. After 30 minutes, the treatment solution was immediately suction filtered at a suction pressure of 0.02 MPa to obtain a filtrate. The filtrate was measured by potentiometric titration using 0.01 N hydrochloric acid to determine the potassium concentration in the filtrate as 38 ppm.

Example 2

(Synthesis test)

A 1.17 mol/L aqueous magnesium sulfate solution and a No. 3 water glass solution comprising 0.46 mol/L $Na_2O$ and 1.44 mol/L $SiO_2$ were continuously loaded into a continuous reaction tank at a fixed rate for coprecipitation reaction. The reaction temperature was 40°C. The pH of the obtained reaction slurry was 8.9. The mean particle size of the particles as the reaction product was 8.2 $\mu$m. The reaction slurry was also suction filtered with a Nutsche filter to remove the water, and the solid was washed with a 15-fold amount of 0.05 mol/L sulfuric acid, for ion-exchange of the sodium in the solid, and then similarly with a 20-fold amount of ion-exchanged water, as amounts with respect to the weight of the solid. The obtained solid was formed into a slurry to a concentration of 250 g/L and spray-dried with a spray drier.

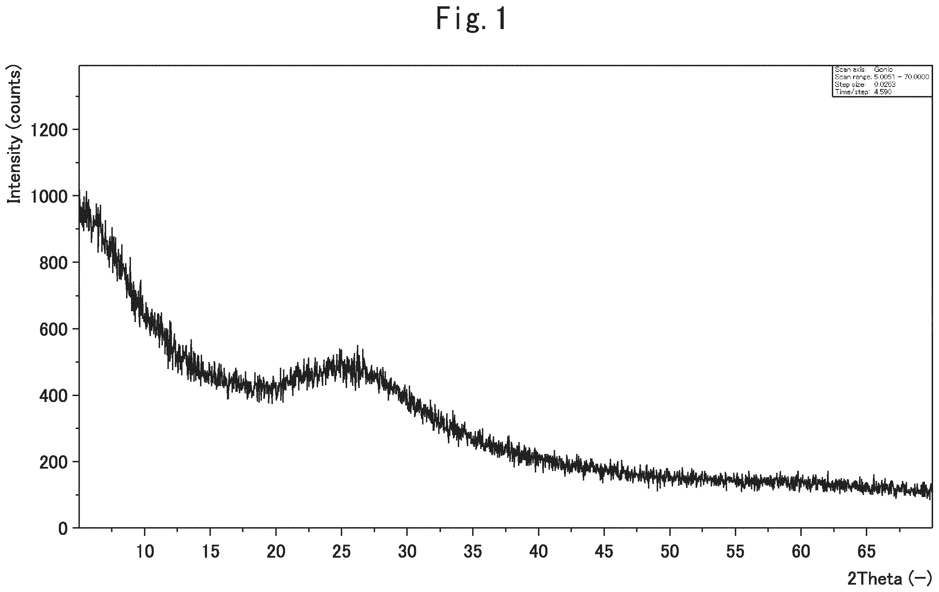

The physical properties of the dry magnesium silicate compound of Example 2 obtained in this manner were measured. The $SiO_2/MgO$ molar ratio of the magnesium silicate compound of Example 2 was thus found to be 3.9. The alkali metal content of the magnesium silicate compound of Example 2 was 0.17 mass%. The BET specific surface area of the magnesium silicate compound of Example 2 was 259 $m^2$/g. The total pore volume of the magnesium silicate compound of Example 2 was 0.56 $cm^3$/g. The liquid pH of the magnesium silicate compound of Example 2 was 9.1. The solid acid amount of the magnesium silicate compound of Example 2 was 0.90 mmol/g. The mean particle size of the magnesium silicate compound of Example 2 was 43.8 $\mu$m. The powder X-ray diffraction pattern of the magnesium silicate compound of Example 2 indicated an amorphous form as shown in Fig. 1.

(Adsorption test 1)

When an adsorption test was carried out in exactly the same manner as Adsorption test 1 of Example 1, the potassium concentration in the filtrate was found to be 211 ppm.

(Adsorption test 2)

When an adsorption test was carried out in exactly the same manner as Adsorption test 2 of Example 1, the potassium concentration in the filtrate was found to be 104 ppm.

(Adsorption test 3)

When an adsorption test was carried out in exactly the same manner as Adsorption test 3 of Example 1, the potassium concentration in the filtrate was found to be 34 ppm.

Example 3

(Synthesis test)

A 1.17 mol/L aqueous magnesium sulfate solution and a No. 3 water glass solution comprising 0.46 mol/L $Na_2O$ and 1.44 mol/L $SiO_2$ were continuously loaded into a continuous reaction tank at a fixed rate for coprecipitation reaction. The reaction temperature was 40°C. The pH of the obtained reaction slurry was 8.9. The mean particle size of the particles as the reaction product was 8.2 $\mu$m. The reaction slurry was also heated and stirred for 2 hours at 90°C. The slurry was then suction filtered with a Nutsche filter to remove the water, and the solid was washed with a 20-fold amount of ion-exchanged water with respect to the weight of the solid. The obtained solid was formed into a slurry to a concentration of 250 g/L and spray-dried with a spray drier.

The physical properties of the dry magnesium silicate compound of Example 3 obtained in this manner were measured. The $SiO_2/MgO$ molar ratio of the magnesium silicate compound of Example 3 was thus found to be 3.4. The alkali metal content of the magnesium silicate compound of Example 3 was 0.98 mass%. The BET specific surface area of the magnesium silicate compound of Example 3 was 714 $m^2$/g. The total pore volume of the magnesium silicate compound of Example 3 was 1.05 $cm^3$/g. The liquid pH of the magnesium silicate compound of Example 3 was 9.6. The solid acid amount of the magnesium silicate compound of Example 3 was 1.65 mmol/g. The mean particle size of the magnesium silicate compound of Example 3 was 39.8 $\mu$m. The powder X-ray diffraction pattern of the magnesium silicate compound of Example 3 indicated an amorphous form.

(Adsorption test 1)

When an adsorption test was carried out in exactly the same manner as Adsorption test 1 of Example 1, the potassium concentration in the filtrate was found to be 123 ppm.

(Adsorption test 2)

When an adsorption test was carried out in exactly the same manner as Adsorption test 2 of Example 1, the potassium concentration in the filtrate was found to be 70 ppm.

(Adsorption test 3)

When an adsorption test was carried out in exactly the same manner as Adsorption test 3 of Example 1, the potassium concentration in the filtrate was found to be 40 ppm.

Example 4

(Synthesis test)

A 1.17 mol/L aqueous magnesium sulfate solution and a No. 3 water glass solution comprising 0.46 mol/L $Na_2O$ and 1.44 mol/L $SiO_2$ were continuously loaded into a continuous reaction tank at a fixed rate for coprecipitation reaction. The reaction temperature was 40°C. The pH of the obtained reaction slurry was 8.9. The mean particle size of the particles as the reaction product was 8.2 $\mu$m. The reaction slurry was also heated and stirred for 2 hours at 90°C. The slurry was then suction filtered with a Nutsche filter to remove the water, and the solid was washed with a 15-fold amount of 0.05 mol/L sulfuric acid, for ion-exchange of the sodium in the solid, and then similarly with a 20-fold amount of ion-exchanged water, as amounts with respect to the weight of the solid. The obtained solid was formed into a slurry to a concentration of 250 g/L and spray-dried with a spray drier.

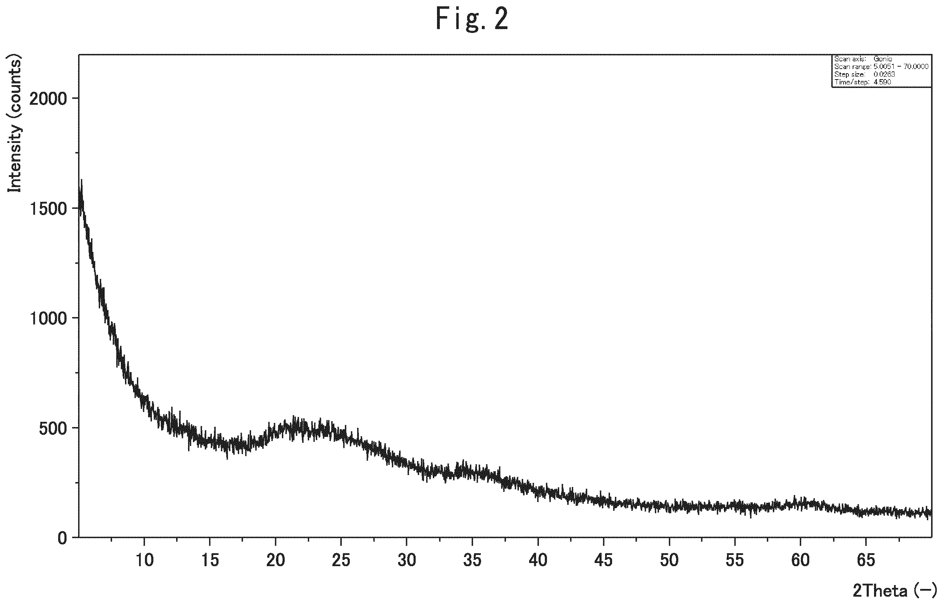

The physical properties of the dry magnesium silicate compound of Example 4 obtained in this manner were measured. The $SiO_2/MgO$ molar ratio of the magnesium silicate compound of Example 4 was thus found to be 4.0. The alkali metal content of the magnesium silicate compound of Example 4 was 0.08 mass%. The BET specific surface area of the magnesium silicate compound of Example 4 was 702 m²/g. The total pore volume of the magnesium silicate compound of Example 4 was 1.07 cm³/g. The liquid pH of the magnesium silicate compound of Example 4 was 8.4. The solid acid amount of the magnesium silicate compound of Example 4 was 1.62 mmol/g. The mean particle size of the magnesium silicate compound of Example 4 was 39.8 $\mu$m. The powder X-ray diffraction pattern of the magnesium silicate compound of Example 4 indicated an amorphous form as shown in Fig. 2.

(Adsorption test 1)

When an adsorption test was carried out in exactly the same manner as Adsorption test 1 of Example 1, the potassium concentration in the filtrate was found to be 162 ppm.

(Adsorption test 2)

When an adsorption test was carried out in exactly the same manner as Adsorption test 2 of Example 1, the potassium concentration in the filtrate was found to be 78 ppm.

(Adsorption test 3)

When an adsorption test was carried out in exactly the same manner as Adsorption test 3 of Example 1, the potassium concentration in the filtrate was found to be 33 ppm.

Comparative Example 1

(Synthesis test)

A 1.35 mol/L aqueous magnesium sulfate solution and a No. 3 water glass solution comprising 0.55 mol/L $Na_2O$ and 1.73 mol/L $SiO_2$ were continuously loaded into a continuous reaction tank at a fixed rate for coprecipitation reaction. The reaction temperature was 40°C. The pH of the obtained reaction slurry was 9.3. The mean particle size of the particles as the reaction product was 12.8 μm. The reaction slurry was also suction filtered with a Nutsche filter to remove the water, and the solid was washed with a 20-fold amount of ion-exchanged water with respect to the weight of the solid. The obtained solid was formed into a slurry to a concentration of 250 g/L and spray-dried with a spray drier.

The physical properties of the dry magnesium silicate compound of Comparative Example 1 obtained in this manner were measured. The $SiO_2$/MgO molar ratio of the magnesium silicate compound of Comparative Example 1 was thus found to be 3.6. The alkali metal content of the magnesium silicate compound of Comparative Example 1 was 1.60 mass%. The BET specific surface area of the magnesium silicate compound of Comparative Example 1 was 126 m$^2$/g. The total pore volume of the magnesium silicate compound of Comparative Example 1 was 0.24 cm$^3$/g. The liquid pH of the magnesium silicate compound of Comparative Example 1 was 10.1. The solid acid amount of the magnesium silicate compound of Comparative Example 1 was 0.61 mmol/g. The mean particle size of the magnesium silicate compound of Comparative Example 1 was 40.6 μm. The powder X-ray diffraction pattern of the magnesium silicate compound of Comparative Example 1 indicated an amorphous form.

(Adsorption test 1)

When an adsorption test was carried out in exactly the same manner as Adsorption test 1 of Example 1, the potassium concentration in the filtrate was found to be 424 ppm.

(Adsorption test 2)

When an adsorption test was carried out in exactly the same manner as Adsorption test 2 of Example 1, the potassium concentration in the filtrate was found to be 283 ppm.

(Adsorption test 3)

When an adsorption test was carried out in exactly the same manner as Adsorption test 3 of Example 1, the potassium concentration in the filtrate was found to be 65 ppm.

The measurement results for the physical properties of the magnesium silicate compounds of Examples 1 to 4 and Comparative Example 1 are shown in Table 1. The potassium concentrations in the filtrates during the adsorption test are listed as "Residual K amount" in Table 1.

[Table 1]

Table 1

|  | Example 1 | Example 2 | Example 3 | Example 4 | Comp. Example 1 |
|---|---|---|---|---|---|
| Mean particle size of reaction product particles (μm) | 8.2 | 8.2 | 8.2 | 8.2 | 12.8 |
| Treatment conditions | Water washing alone | Acid treatment | Heat aging | Heat aging/ acid treatment | Water washing alone |
| Molar ratio (SiO$_2$/MgO) | 3.5 | 3.9 | 3.4 | 4.0 | 3.6 |
| Alkali metal content (mass%) | 1.00 | 0.17 | 0.98 | 0.08 | 1.60 |
| BET specific surface area (m$^2$/g) | 295 | 259 | 714 | 702 | 126 |
| Total pore volume (cm$^3$/g) | 0.47 | 0.56 | 1.05 | 1.07 | 0.24 |
| Liquid pH | 9.8 | 9.1 | 9.6 | 8.4 | 10.1 |
| Solid acid amount (mmol/g) | 0.73 | 0.90 | 1.65 | 1.62 | 0.61 |
| Mean particle size (μm) | 42.2 | 43.8 | 39.8 | 39.8 | 40.6 |

(continued)

| | Example 1 | Example 2 | Example 3 | Example 4 | Comp. Example 1 |
|---|---|---|---|---|---|
| Adsorption test [K : 1400 ppm] | | | | | |
| Residual K amount [0.25 phr addition] (ppm) | 209 | 211 | 123 | 162 | 424 |
| Residual K amount [0.35 phr addition] (ppm) | 128 | 104 | 70 | 78 | 283 |
| Residual K amount [0.50 phr addition] (ppm) | 38 | 34 | 40 | 33 | 65 |

As shown in Table 1, the adsorbents comprising the magnesium silicate compounds of Examples 1 to 4 had low residual K amounts in the adsorption test, and exhibited very excellent adsorption performance for alkali metals. The adsorbent comprising the magnesium silicate compound of Comparative Example 1 had a high residual K amount in the adsorption test, and the adsorption performance for alkali metals was insufficient.

INDUSTRIAL APPLICABILITY

The adsorbent of the invention has extremely high adsorption capacity compared to conventional adsorbents that comprise magnesium silicate compounds, and can also adsorb substances to be adsorbed while being used in a smaller amount, and it is therefore suitable for use as an adsorbent for various types of industrial purposes, for example. The adsorbent of the invention is particularly useful as an adsorbent for adsorption removal of alkali metal-containing basic catalysts during production of polyether polyols.

**Claims**

1. An adsorbent comprising an amorphous magnesium silicate compound, wherein:

    the magnesium silicate compound
    has an alkali metal content of 1.20 mass% or lower, and
    has a solid acid amount of 0.70 mmol/g or greater.

2. The adsorbent according to claim 1, wherein the magnesium silicate compound is a compound represented by a following formula (1).

$$(MgO)_X \cdot SiO_2 \cdot mH_2O \qquad (1)$$

[In formula (1), x is a number satisfying an inequality $0.1 \leq x \leq 0.5$, and m is a number satisfying an inequality $0.1 \leq m \leq 1.5$.]

3. The adsorbent according to claim 1 or 2, wherein a BET specific surface area of the magnesium silicate compound is 200 $m^2$/g to 1000 $m^2$/g.

4. The adsorbent according to any one of claims 1 to 3, wherein a total pore volume of the magnesium silicate compound is 0.40 $cm^3$/g to 1.50 $cm^3$/g.

5. A method of reducing an alkali metal content in a polyether polyol, wherein the method comprises contacting an adsorbent according to any one of claims 1 to 4, with a polyether polyol comprising an alkali metal-containing basic catalyst.

Fig. 1

Intensity (counts)

2Theta (−)

Fig. 2

## INTERNATIONAL SEARCH REPORT

International application No.

**PCT/JP2023/025909**

| A. | CLASSIFICATION OF SUBJECT MATTER |
|---|---|

***B01J 20/10***(2006.01)i; ***B01D 15/00***(2006.01)i; ***B01J 20/04***(2006.01)i; ***B01J 20/28***(2006.01)i; ***C01B 33/22***(2006.01)i
FI:   B01J20/10 C; B01D15/00 J; B01J20/04 C; B01J20/28 Z; C01B33/22

According to International Patent Classification (IPC) or to both national classification and IPC

| B. | FIELDS SEARCHED |
|---|---|

Minimum documentation searched (classification system followed by classification symbols)

B01J20/00-20/28;20/30-20/34; B01D15/00; C01B33/22; C07C41/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2004-75674 A (KYOWA CHEM. IND. CO., LTD.) 11 March 2004 (2004-03-11) claim 1, paragraphs [0001], [0056]-[0064] | 1-5 |
| X | JP 2020-513048 A (THE DALLAS GROUP OF AMERICA, INC.) 30 April 2020 (2020-04-30) paragraphs [0021]-[0024], [0052]-[0072], tables 1-6 | 1-5 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 September 2023** | **03 October 2023** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/025909**

| Patent document cited in search report | | | Publication date (day/month/year) | Patent family member(s) | Publication date (day/month/year) |
|---|---|---|---|---|---|
| JP | 2004-75674 | A | 11 March 2004 | US 2004/0192884 A1 claim 1, paragraphs [0001], [0064]-[0076] CN 1545530 A KR 10-2005-0018796 A | |
| JP | 2020-513048 | A | 30 April 2020 | US 2018/0273682 A1 paragraphs [0020]-[0023], [0056]-[0073], tables 1-6 WO 2018/175147 A1 CA 3057293 A1 KR 10-2019-0128226 A CN 110650783 A | |

Form PCT/ISA/210 (patent family annex) (January 2015)

**REFERENCES CITED IN THE DESCRIPTION**

**Patent documents cited in the description**

- JP 2004075674 A